# EUROPEAN PATENT SPECIFICATION

(11) **EP 3 638 506 B1**
(45) Date of publication and mention of the grant of the patent: **01.05.2024**
(21) Application number: 17914100.7
(22) Date of filing: 12.06.2017
(51) Int. Cl.: B32B 27/30, B32B 27/08, C08L 23/08, C08L 23/10, C08L 23/12

(54) **POLYMER BLENDS FOR USE IN LAMINATES, LAMINATES, AND ARTICLES**
POLYMERMISCHUNGEN ZUR VERWENDUNG IN LAMINATEN, LAMINATE UND ARTIKEL
MÉLANGES DE POLYMÈRES DESTINÉS À ÊTRE UTILISÉS DANS DES STRATIFIÉS, STRATIFIÉS ET ARTICLES

(43) Date of publication of application: 22.04.2020
(73) Proprietor: Dow Global Technologies LLC, Midland, MI 48674 (US)
(72) Inventor: LIU, Andong, Shanghai 201203 (CN); MA, Wanfu, Shanghai 201203 (CN); GUO, Yunlong, Shanghai 201203 (CN); CHEN, Hongyu, Shanghai 201203 (CN); ZHANG, Yi, Shanghai 201203 (CN); WALTHER, Brian W., Freeport, TX 77541 (US)
(74) Representative: Boult Wade Tennant LLP
(86) International application number: PCT/CN2017/087859
(87) International publication number: WO 2018/227323

(56) References cited:
- EP-A1- 2 371 735
- JP-A- 2001 261 906
- JP-A- 2001 261 906
- US-A1- 2002 035 204
- US-A1- 2006 257 652
- US-A1- 2010 269 890
- US-A1- 2010 269 890

## Description

### Field

The present invention relates to polymer blends that can be used in laminates, to laminates comprising one or more layers formed from such polymer blends, and to articles comprising such laminates.

### Introduction

Hot melt adhesive films are used to join two substrates by placing the adhesive film between the two substrates, and heating the assembly to liquefy the adhesive. The bond is formed when the adhesive cools and solidifies. Hot melt adhesive films are typically formulated from synthetic polymers. Such adhesive films are available in a variety of thicknesses, either as a random web or a continuous film. Hot melt adhesive films can be supplied on release liner and die cut for precise and automated assembly in some applications.

JP 2001 261906 A relates to a thermoplastic resin.

US 2002/035204 A1 relates to sealing strips, to methods for manufacturing and connecting sealing strips.

US2010/269890 A1 relates to an encapsulant adapted for use in a photovoltaic module includes a random terpolymer and a random copolymer.

Polyethylene terephthalate ("PET") films are sometimes laminated together using hot melt adhesives to form a laminate. PET films are widely packaging, automotive applications, electronics, electrical appliances, etc. due to their high gloss, high clarity, and rigidity. Achieving good adhesion between PET film and PET film in a laminate has been a significant challenge for hot melt adhesive films due, for example, to the lack of functional groups, polarity, and unique morphology in PET.

There remains a need for adhesive films that can provide desirable adhesion between PET layers while minimizing undesirable effects.

### Summary

The present invention provides polymer blends that in some aspects provide significantly improved adhesion when used to adhere PET films. Further, in some aspects, the present invention provides hot melt adhesive films formed from the polymer blends that can be incorporated into a laminate or other multilayer structure.

In one aspect, the present invention provides a polymer blend that comprises (a) a terpolymer comprising ethylene, alkyl acrylate, and glycidyl methacrylate, having an alkyl acrylate content of 5 to 30 weight percent based on the weight of the terpolymer and having a glycidyl methacrylate content of 1 to 10 weight percent based on the weight of the terpolymer, wherein the amount of terpolymer (a) comprises 10 to 50 weight percent of the blend based on the total weight of the blend, and wherein the alkyl acrylate is methyl acrylate or butyl acrylate; and (b) a copolymer comprising ethylene and at least one of methyl acrylate and ethyl acrylate having an acrylate content of 5 to 30 weight percent based on the weight of the copolymer, wherein the amount of copolymer (b) comprises 50 to 90 weight percent of the blend based on the total weight of the blend, wherein the amount of terpolymer (a) and copolymer (b) is at least 80 weight percent of the blend based on the total weight of the blend. In some embodiments, the alkyl acrylate is methyl acrylate.

In another aspect, the present invention provides laminate comprising at least three layers, each layer having opposing facial surfaces, wherein Layer A comprises polyethylene terephthalate; Layer B comprises a polymer blend according to any of the embodiments disclosed here, wherein a top facial surface of Layer B is in adhering contact with a bottom facial surface of Layer A; and Layer C comprises polyethylene terephthalate, wherein a top facial surface of Layer C is in adhering contact with a bottom facial surface of Layer B.

In another aspect, the present invention provides an article comprising a laminate according to any of the embodiments disclosed herein.

These and other embodiments are described in more detail in the Detailed Description.

### Detailed Description

Unless stated to the contrary, implicit from the context, or customary in the art, all parts and percents are based on weight, all temperatures are in °C, and all test methods are current as of the filing date of this disclosure.

The term "composition," as used herein, refers to a mixture of materials which comprises the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or polymer mixture.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

"Polypropylene" means a polymer having greater than 50 wt% units derived from propylene monomer.

The term, "ethylene/α-olefin interpolymer," as used herein, refers to an interpolymer that comprises, in polymerized form, a majority amount of ethylene monomer (based on the weight of the interpolymer), and a α-olefin.

The term, "ethylene/α-olefin copolymer," as used herein, refers to a copolymer that comprises, in polymerized form, a majority amount of ethylene monomer (based on the weight of the copolymer), and a α-olefin, as the only two monomer types.

The term, "terpolymer," as used herein, refers to a polymer prepared by the polymerization of three different types of monomers.

The term "in adhering contact" and like terms mean that one facial surface of one layer and one facial surface of another layer are in touching and binding contact to one another such that one layer cannot be removed from the other layer without damage to the interlayer surfaces (i.e., the in-contact facial surfaces) of both layers.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

"Polyethylene" or "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density

Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392,). LDPE resins typically have a density in the range of 0.916 to 0.935 g/cm³.

The term "LLDPE", includes both resin made using the traditional Ziegler-Natta catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm³. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/cm³, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art.

Unless otherwise indicated herein, the following analytical methods are used in the describing aspects of the present invention:
"Density" is determined in accordance with ASTM D792.
"Melt index": Melt indices I₂ (or I2) and I₁₀ (or I10) are measured in accordance with ASTM D-1238-04 at 190° C and at 2.16 kg and 10 kg load, respectively. Their values are reported in g/10 min. "Melt flow rate" is used for polypropylene based resins and determined according to ASTM D1238 (230° C at 2.16 kg).
"Acrylate content": The acrylate content of ethylene/(m)ethacrylate copolymers is measured in accordance with ASTM D4094.

Additional properties and test methods are described further herein.

In one aspect, the present invention provides a polymer blend that comprises (a) a terpolymer comprising ethylene, alkyl acrylate, and glycidyl methacrylate, having an alkyl acrylate content of 5 to 30 weight percent based on the weight of the terpolymer and having a glycidyl methacrylate content of 1 to 10 weight percent based on the weight of the terpolymer, wherein the amount of terpolymer (a) comprises 10 to 50 weight percent of the blend based on the total weight of the blend, and wherein the alkyl acrylate is methyl acrylate or butyl acrylate; and (b) a copolymer comprising ethylene and at least one of methyl acrylate and ethyl acrylate having an acrylate content of 5 to 30 weight percent based on the weight of the copolymer, wherein the amount of copolymer (b) comprises 50 to 90 weight percent of the blend based on the total weight of the blend, wherein the amount of terpolymer (a) and copolymer (b) is at least 80 weight percent of the blend based on the total weight of the blend.

In one aspect, the present invention provides a polymer blend that comprises (a) a terpolymer comprising ethylene, methyl acrylate, and glycidyl methacrylate, having a methyl acrylate content of 5 to 30 weight percent based on the weight of the terpolymer and having a glycidyl methacrylate content of 1 to 10 weight percent based on the weight of the terpolymer, wherein the amount of terpolymer (a) comprises 10 to 50 weight percent of the blend based on the total weight of the blend; and (b) a copolymer comprising ethylene and at least one of methyl acrylate and ethyl acrylate having an acrylate content of 5 to 30 weight percent based on the weight of the copolymer, wherein the amount of copolymer (b) comprises 50 to 90 weight percent of the blend based on the total weight of the blend, wherein the amount of terpolymer (a) and copolymer (b) is at least 80 weight percent of the blend based on the total weight of the blend.

In some embodiments, the melt index (I₂) ratio of terpolymer (a) to copolymer (b) (I₂ of terpolymer (a)/I₂ of copolymer (b)) is greater than 2. In some embodiments, the melt index (I₂) ratio of terpolymer (a) to copolymer (b) (I₂ of terpolymer (a)/I₂ of copolymer (b)) is greater than 4.

In some embodiments, copolymer (b) comprises ethylene and ethyl acrylate, and the polymer blend comprises 4 to 30 weight percent methyl acrylate, less than 13 weight percent ethyl acrylate, and less than 3 weight percent glycidyl methacrylate, each based on the total weight of the polymer blend. In some embodiments, copolymer (b) comprises ethylene and methyl acrylate, and the polymer blend comprises 4 to 30 weight percent methyl acrylate, less than 13 weight percent ethyl acrylate, and less than 3 weight percent glycidyl methacrylate, each based on the total weight of the polymer blend.

In some embodiments, polymer blends of the present invention further comprise a polyolefin having a density of 0.910 g/cm³ or less. The blend comprises 20 weight percent or less of the polyolefin based on the total weight of the blend in some embodiments, or 10 weight percent or less of the polyolefin based on the total weight of the blend in some embodiments, or 5 weight percent or less of the polyolefin based on the total weight of the blend in some embodiments. In some embodiments, a polymer blend comprises 10 to 20 weight percent of terpolymer (a), 70 to 90 weight percent of copolymer (b), and 0 to 10 weight percent of the polyolefin, based on the total weight of the blend.

The polymer blend can comprise a combination of two or more embodiments as described herein.

Embodiments of the present invention also relate to laminates that include a layer formed from a polymer blend of the present invention. In such embodiments, the layer formed from a polymer blend of the present invention can be an adhesive layer. In one aspect, a laminate of the present invention comprises at least three layers, each layer having opposing facial surfaces, wherein Layer A comprises polyethylene terephthalate; Layer B comprises a polymer blend according to any of the embodiments of the present invention disclosed herein, wherein a top facial surface of Layer B is in adhering contact with a bottom facial surface of Layer A; and Layer C comprises polyethylene terephthalate, wherein a top facial surface of Layer C is in adhering contact with a bottom facial surface of Layer B. In some embodiments, at least one of Layer A and Layer C is a monolayer film. In some embodiments, at least one of Layer A and Layer C is a multilayer film, wherein an outermost layer of such multilayer film is a polyethylene terephthalate layer in adhering contact with Layer B.

Laminates of the present invention can comprise a combination of two or more embodiments as described herein.

Embodiments of the present invention also relate to articles comprising any of the laminates (e.g., multilayer films) disclosed herein. In some embodiments, the article is a package.

### Polymer Blends

Polymer blends according to embodiments of the present invention comprise a terpolymer comprising ethylene, alkyl acrylate (wherein the alkyl acrylate is methyl acrylate or butyl acrylate), and glycidyl methacrylate having certain features specified herein and a copolymer comprising ethylene and at least one of methyl acrylate and ethyl acrylate having certain features as specified herein. For ease of reference, the terpolymer comprising ethylene, alkyl acrylate (wherein the alkyl acrylate is methyl acrylate or butyl acrylate), and glycidyl methacrylate will also be referred to herein as the "E-AA-GMA terpolymer," or as the "E-MA-GMA terpolymer" when it comprises ethylene, methyl acrylate, and glycidyl methacryate, or as the "E-BA-GMA terpolymer" when it comprises ethylene, butyl acrylate, and glydicyl methacrylate. It should be understood that E-AA-GMA terpolymer refers to both E-MA-GMA terpolymer and E-BA-GMA terpolymer unless only one is clearly applicable from the context. In addition, for ease of reference, the copolymer comprising ethylene and at least one of methyl acrylate and ethyl acrylate will also be referred to herein as "ethylene/(m)ethyl acrylate copolymer" with the understanding that some such copolymers can comprise both methyl acrylate monomer and ethyl acrylate monomer.

The E-AA-GMA terpolymer used in embodiments of the present invention is characterized as a random terpolymer. The E-AA-GMA terpolymers used in polymer blends of the present invention may be more precisely referred to as interpolymers because they are formed by the polymerization of a mixture of the monomers, in contradistinction to terpolymers made by "grafting" or "block-polymerization" methods.

The E-AA-GMA terpolymer used in some embodiments of the present invention can be characterized as having an alkyl acrylate content of 5 to 30 weight percent based on the weight of the terpolymer and a glycidyl methacrylate content of 1 to 10 weight percent based on the weight of the terpolymer. The E-AA-GMA terpolymer has an alkyl acrylate content of 15 to 30 weight percent and a glycidyl methacrylate content of 4 to 10 weight percent, each based on the weight of the terpolymer, in some embodiments.

The E-MA-GMA terpolymer used in some embodiments of the present invention can be characterized as having a methyl acrylate content of 5 to 30 weight percent based on the weight of the terpolymer and a glycidyl methacrylate content of 1 to 10 weight percent based on the weight of the terpolymer. The E-MA-GMA terpolymer has a methyl acrylate content of 15 to 30 weight percent and a glycidyl methacrylate content of 4 to 10 weight percent, each based on the weight of the terpolymer, in some embodiments.

The E-AA-GMA terpolymer may further be characterized as having a melt index (I₂) of 1 to 20 g/10 minutes in some embodiments. All individual values and subranges between 1 and 20 g/10 minutes are included herein and disclosed herein. For example, the E-AA-GMA terpolymer can have a melt index from a lower limit of 1, 2, 3, 4, 5, 7, 9, or 10 g/10 minutes to an upper limit of 8, 10, 12, 15, 17, 19, or 20 g/10 minutes. In some embodiments, the E-AA-GMA terpolymer has a melt index (I₂) of 3 to 15 g/10 minutes.

The polymer blend comprises 10 to 50 weight percent E-AA-GMA terpolymer based on the weight of the blend in some embodiments. In some embodiments, the polymer blend comprises 10 to 30 weight percent E-AA-GMA terpolymer based on the weight of the blend in some embodiments. In some embodiments, the polymer blend comprises 10 to 20 weight percent of the E-AA-GMA terpolymer based on the weight of the blend.

Examples of commercially available E-MA-GMA terpolymers that can be used in embodiments of the present invention include LOTADER E-MA-GMA terpolymers, such as LOTADER 8900, which are commercially available from Arkema. An example of a commercially available E-BA-GMA terpolymer that can be used in some embodiments of the present invention include DuPont ELVALOY PTW terpolymer, which is commercially available from DuPont.

In addition to an E-AA-GMA terpolymer, polymer blends of the present invention further comprise a copolymer comprising ethylene and at least one of methyl acrylate and ethyl acrylate (ethylene/(m)ethyl acrylate copolymer).

The ethylene/(m)ethyl acrylate copolymer used in embodiments of the present invention is characterized as a random copolymer. Such ethylene/(m)ethyl acrylate copolymer can be prepared at high pressure by the action of a free-radical polymerization initiator, acting on a mixture of ethylene and methyl acrylate and/or ethyl acrylate monomers using techniques known to those of skill in the art. The ethylene/(m)ethyl acrylate copolymers used in polymer blends of the present invention are more precisely referred to as interpolymers because they are formed by the polymerization of a mixture of the comonomers, in contradistinction to copolymers made by "grafting" or "block-polymerization" methods.

The ethylene/(m)ethyl acrylate copolymer used in some embodiments of the present invention can be characterized as having an acrylate content of 5 to 30 weight percent based on the weight of the copolymer. The ethylene/(m)ethyl acrylate copolymer has an acrylate content of 10 to 30 weight percent based on the weight of the copolymer in some embodiments. The ethylene/(m)ethyl acrylate copolymer has an acrylate content of 15 to 30 weight percent based on the weight of the copolymer in some embodiments.

The ethylene/(m)ethyl acrylate copolymer may further be characterized as having a melt index (I₂) of 0.5 to 20 g/10 minutes in some embodiments. All individual values and subranges between 0.5 and 20 g/10 minutes are included herein and disclosed herein. For example, the ethylene/(m)ethyl acrylate copolymer can have a melt index from a lower limit of 0.5, 0.8, 1, 5, 10, 12, or 15 g/10 minutes to an upper limit of 3.5, 4, 4.5, 5, 10, 12, 15, 18, or 20 g/10 minutes. In some embodiments, the ethylene/(m)ethyl acrylate copolymer has a melt index (I₂) of 0.5 to 5 g/10 minutes, or 0.5 to 3.5 g/10 minutes in some embodiments.

The polymer blend comprises 50 to 90 weight percent ethylene/(m)ethyl acrylate copolymer based on the weight of the blend in some embodiments. In some embodiments, the polymer blend comprises 60 to 90 weight percent ethylene/(m)ethyl acrylate copolymer based on the weight of the blend in some embodiments. In some embodiments, the polymer blend comprises 70 to 90 weight percent of the ethylene/(m)ethyl acrylate copolymer based on the weight of the blend.

Examples of commercially available ethylene/(m)ethyl acrylate copolymers that can be used in embodiments of the present invention include AMPLIFY^{™} EA ethylene/ethyl acrylate copolymers which are commercially available from The Dow Chemical Company, and Lotryl ethylene/methyl acrylate copolymers which are commercially available from Arkema.

The ratio of the melt index (I₂) of the E-AA-GMA terpolymer (wherein the alkyl acrylate is methyl acrylate or butyl acrylate) to the melt index (I₂) of the ethylene/(m)ethyl acrylate copolymer can be important in some embodiments. In particular, it can be important to have a large melt index (I₂) difference between the E-AA-GMA terpolymer and the ethylene/(m)ethyl acrylate copolymer. Such a dispersion of E-AA-GMA within the continuous phase of ethylene/(m)ethyl acrylate copolymer is believed to provide improved adhesion performance. In some embodiments, the melt index (I₂) ratio of E-AA-GMA terpolymer to ethylene/(m)ethyl acrylate copolymer (I₂ of E-AA-GMA terpolymer /I₂ of ethylene/(m)ethyl acrylate copolymer) is greater than 2. In some embodiments, the melt index (I₂) ratio of E-AA-GMA terpolymer to ethylene/(m)ethyl acrylate copolymer (I₂ of E-AA-GMA terpolymer/I₂ of ethylene/(m)ethyl acrylate copolymer) is greater than 4. In some embodiments, the melt index (I₂) ratio of E-AA-GMA terpolymer to ethylene/(m)ethyl acrylate copolymer (I₂ of ethylene/(meth)acrylic acid copolymer /I₂ of ethylene/(m)ethyl acrylate copolymer) is less than 100.

The ratio of the melt index (I₂) of the E-MA-GMA terpolymer to the melt index (I₂) of the ethylene/(m)ethyl acrylate copolymer can be important in some embodiments. In particular, it can be important to have a large melt index (I₂) difference between the E-MA-GMA terpolymer and the ethylene/(m)ethyl acrylate copolymer. Such a dispersion of E-MA-GMA within the continuous phase of ethylene/(m)ethyl acrylate copolymer is believed to provide improved adhesion performance. In some embodiments, the melt index (I₂) ratio of E-MA-GMA terpolymer to ethylene/(m)ethyl acrylate copolymer (I₂ of E-MA-GMA terpolymer /I₂ of ethylene/(m)ethyl acrylate copolymer) is greater than 2. In some embodiments, the melt index (I₂) ratio of E-MA-GMA terpolymer to ethylene/(m)ethyl acrylate copolymer (I₂ of E-MA-GMA terpolymer/I₂ of ethylene/(m)ethyl acrylate copolymer) is greater than 4. In some embodiments, the melt index (I₂) ratio of E-MA-GMA terpolymer to ethylene/(m)ethyl acrylate copolymer (I₂ of ethylene/(meth)acrylic acid copolymer /I₂ of ethylene/(m)ethyl acrylate copolymer) is less than 100.

In some embodiments, when copolymer (b) comprises ethylene and ethyl acrylate, and the polymer blend is an E-MA-GMA terpolymer, the E-MA-GMA terpolymer comprises 4 to 30 weight percent methyl acrylate, less than 13 weight percent ethyl acrylate, and less than 3 weight percent glycidyl methacrylate, each based on the total weight of the polymer blend. In some embodiments, when copolymer (b) comprises ethylene and methyl acrylate, and the polymer blend is an E-MA-GMA terpolymer, the E-MA-GMA terpolymer comprises 4 to 30 weight percent methyl acrylate, less than 13 weight percent ethyl acrylate, and less than 3 weight percent glycidyl methacrylate, each based on the total weight of the polymer blend.

The polymer blend will primarily comprise E-AA-GMA terpolymer (wherein the alkyl acrylate is methyl acrylate or butyl acrylate) and ethylene/(m)ethyl acrylate copolymer. The total amount of E-AA-GMA terpolymer and ethylene/(m)ethyl acrylate copolymer will be at least 80 weight percent of the polymer blend based on the total weight of the blend. In some embodiments, the total amount of E-AA-GMA terpolymer and ethylene/(m)ethyl acrylate copolymer will be at least 90 weight percent of the polymer blend based on the total weight of the blend. In some embodiments, the total amount of E-AA-GMA terpolymer and ethylene/(m)ethyl acrylate copolymer will be at least 95 weight percent of the polymer blend based on the total weight of the blend. In some embodiments, the total amount of E-AA-GMA terpolymer and ethylene/(m)ethyl acrylate copolymer will be at least 99 weight percent of the polymer blend based on the total weight of the blend.

In addition to E-AA-GMA terpolymer and ethylene/(m)ethyl acrylate copolymer, polymer blends of the present invention, in some embodiments, may further comprise a polyolefin having a density of 0.910 g/cm³ or less. Such polyolefins can include polymers that comprise, in polymerized form, a majority amount of ethylene or propylene monomer (based on the weight of the polymer), and optionally may comprise one or more comonomers.

In some embodiments, the polyolefin comprises a polyethylene having a density of 0.910 g/cm³ or less. All individual values and subranges from equal to or less than 0.910 g/ cm³ are included and disclosed herein; for example, the density of the polyethylene can be equal to or less than 0.910 g/cm³, or in the alternative, or in the alternative, equal to or less than 0.900 g/cm³, or in the alternative, equal to or less than 0.0890 g/cm³, or in the alternative, equal to or less than 0.880 g/cm³. When the polyolefin comprises polypropylene, persons of skill in the art can identify an appropriate density for the polypropylene based on the teachings herein.

In some embodiments, the polyolefin has a melt index (I₂) of 20 g/10 minutes or less. All individual values and subranges up to 20 g/10 minutes are included herein and disclosed herein. For example, the polyolefin can have a melt index from a lower limit of 0.2, 0.25, 0.5, 0.75, 1, 2, 4, 5, or 10 g/10 minutes to an upper limit of 1, 2, 4, 5, or 10 g/10 minutes. The polyolefin has a melt index (I₂) of up to 10 g/10 minutes in some embodiments. The polyolefin has a melt index (I₂) of up to 5 g/10 minutes in some embodiments. In some embodiments, the polyolefin has a melt index (I₂) less than 3 g/10 minutes.

Polyethylenes that are particularly well-suited for use in some embodiments of the present invention include linear low density polyethylene (LLDPE), low density polyethylene (LDPE), polyolefin elastomers, polyolefin plastomers, and combinations thereof.

When the polyolefin comprises LDPE and/or LLDPE, the density of the LDPE or LLDPE will typically be in the range of 0.916 to 0.920 g/cm³. When the polyolefin comprises polyolefin plastomer or polyolefin elastomer, the density will typically be less than 0.900 g/cm³, and less than 0.880 g/cm³ in some embodiments.

Examples of commercially available LDPE that can be used in embodiments of the present invention include DOW^{™} LDPE 4012 and AGILITY^{™} 1001, as well as other low density polyethylenes, which are commercially available from The Dow Chemical Company. Examples of commercially available LLDPE that can be used in embodiments of the present invention include DOWLEX^{™} linear low density polyethylene, such as DOWLEX^{™} 2256G and DOWLEX^{™} 2645G, as well as others, which are commercially available from The Dow Chemical Company. Examples of commercially available polyolefin elastomers that can be used in embodiments of the present invention include ENGAGE^{™} polyolefin elastomers, such as ENGAGE^{™} 8100, ENGAGE^{™} 8107, ENGAGE^{™} 8842, ENGAGE^{™} 8180, ENGAGE^{™} 8150, ENGAGE^{™} 8157, ENGAGE^{™} 8003, ENGAGE^{™} 8440, ENGAGE^{™} 8480, ENGAGE^{™} 8540, ENGAGE^{™} 8450, and ENGAGE^{™} 8452, as well as others, which are commercially available from The Dow Chemical Company.

Persons of skill in the art can select suitable commercially available polypropylenes for use in polymer blends based on the teachings herein.

In embodiments where such polyolefins are included in the polymer blend, the polymer blend comprises 20 weight percent or less of the polyolefin based on the weight of the blend in some embodiments. In some embodiments, the polymer blend comprises 10 weight percent or less polyolefin based on the weight of the blend. In some embodiments, the polymer blend comprises 5 weight percent or less of the polyolefin based on the weight of the blend. As indicated above, in some embodiments, the polymer blend does not include any such polyolefins.

In some embodiments wherein the polymer blend includes such polyolefins, the polymer blend can comprise 10 to 20 weight percent of the E-AA-GMA terpolymer (wherein the alkyl acrylate is methyl acrylate or butyl acrylate), 60 to 90 weight percent of the ethylene/(m)ethyl acrylate copolymer, and up to 20 weight percent of the polyolefin, based on the total weight of the blend. In some embodiments, the polymer blend can comprise 10 to 20 weight percent of E-AA-GMA terpolymer, 70 to 90 weight percent of and ethylene/(m)ethyl acrylate copolymer, and up to 10 weight percent of the polyolefin, based on the total weight of the blend. In some embodiments, the polymer blend can comprise 10-20 weight percent of E-AA-GMA terpolymer, 70 to 90 weight percent of and ethylene/(m)ethyl acrylate copolymer, and up to 5 weight percent of the polyolefin, based on the total weight of the blend.

In some embodiments wherein the polymer blend includes such polyolefins, the polymer blend can comprise 10 to 20 weight percent of the E-MA-GMA terpolymer, 60 to 90 weight percent of the ethylene/(m)ethyl acrylate copolymer, and up to 20 weight percent of the polyolefin, based on the total weight of the blend. In some embodiments, the polymer blend can comprise 10 to 20 weight percent of E-MA-GMA terpolymer, 70 to 90 weight percent of and ethylene/(m)ethyl acrylate copolymer, and up to 10 weight percent of the polyolefin, based on the total weight of the blend. In some embodiments, the polymer blend can comprise 10-20 weight percent of E-MA-GMA terpolymer, 70 to 90 weight percent of and ethylene/(m)ethyl acrylate copolymer, and up to 5 weight percent of the polyolefin, based on the total weight of the blend.

In some embodiments, the polymer blend can further comprise one or more additives known to those of skill in the art including, for example, antioxidants, colorants, slip agents, antiblocks, processing aids, and combinations thereof. In some embodiments, the polymer blend comprises up to 5 weight percent of such additives. All individual values and subranges from 0 to 5 wt% are included and disclosed herein; for example, the total amount of additives in the polymer blend can be from a lower limit of 0.5, 1, 1.5, 2, 2.5, 3, 3.5, 4, or 4.5 wt% to an upper limit of 1, 2, 3, 4, or 5 wt%.

As will be discussed below, a polymer blend of the present invention can be incorporated/converted into a laminate using techniques known to those of skill in the art based on the teachings herein. In some embodiments, for example, polymer blends of the present invention can be provides as an adhesive layer between two layer comprising polyethylene terephthalate. In some embodiments, the polymer blend can be provided as a hot melt adhesive film that can be used to form a laminate.

Polymer blends of the present invention can be prepared by melt blending the prescribed amounts of the components with a twin screw extruder before feeding into an extrusion coater (or other equipment) for film fabrication. Such polymer blends can also be prepared by tumble blending the prescribed amounts of the components before feeding into the extrusion coater (or other equipment) for film fabrication. In some embodiments, polymer blends of the present invention can be in the form of pellets. For example, the individual components can be melt blended and then formed into pellets using a twin screw extruder or other techniques known to those of skill in the art based on the teachings herein. In some embodiments, a polymer blend can include the combination of a compounded pellet and additional polymer that is tumble blended before feeding into the extrusion coater. For example, a pellet comprising a blend of E-AA-GMA terpolymer and polyolefin can be tumble blended with ethylene/(m)ethyl acrylate copolymer to provide a polymer blend having the desired weight percentages of E-AA-GMA terpolymer, ethylene/(m)ethyl acrylate copolymer, and polyolefin.

Polymer blends can be for formed into a hot melt adhesive film using an extrusion coating device or similar techniques known to those of skill in the art in view of the teachings herein.

### Laminates

Some embodiments of the present invention also relate to laminates. In some such embodiments, a laminate comprises at least three layers with each layer having opposing facial surfaces. Layer A and Layer C comprise polyethylene terephthalate (PET) and Layer B comprises a polymer blend according to any of the embodiments disclosed herein. Layer B comprising the inventive polymer blend is an adhesive layer between Layers A and C and adheres Layer A to Layer C to form the laminate. Polymer blends, according to some embodiments of the present invention advantageously adhere PET films and/or multilayer films having an outer PET layer to form a laminate. In such embodiments, any polyethylene terephthalate known to those of skill in the art based on the teachings herein can be used.

In some embodiments, Layer A and/or Layer C are monolayer films formed from PET. In some embodiments, at least one of Layer A and Layer C is a multilayer film. In embodiments where Layer A and/or Layer C is a multilayer film, the layer of the multilayer film in contact with Layer B is a PET layer. In some embodiments, Layer A or Layer C is a monolayer PET film, and the other layer is a multilayer film with a PET layer in adhering contact with Layer B. When Layer A or Layer C is a multilayer film with an outer PET layer, the other layers can be any other type of layer known to those of skill in the art for use in multilayer films depending on the application including, for example, barrier layers, sealant layers, tie layers, polyethylene layers, polypropylene layers, etc.

Laminates of the present invention can be formed using techniques known to those of skill in the art in view of the teachings herein including, for example, extrusion lamination or extrusion coating.

### Articles

Embodiments of the present invention also provide articles formed from any of the laminates described herein. Examples of such articles can include packages, flexible packages, pouches, electronics, appliances, clothing, and others. In some embodiments, packages of the present invention can comprise a liquid, a powder, a food product, or other items. Articles and packages of the present invention can be formed from laminates disclosed herein using techniques known to those of skill in the art in view of the teachings herein.

Some embodiments of the invention will now be described in detail in the following Examples.

### Examples

The following raw materials are used in the examples discussed below:

| Product | Product (Abbreviation) | Melt Index (I₂) (dg/min) | Density (g/cc) | Comonomer Content (weight) |
|---|---|---|---|---|
| DOWLEX^{™} 2045 | LLDPE | 1.0 | 0.920 | -- |
| AMPLIFY^{™} EA 100 | Ethylene/Ethyl Acrylate Copolymer (EEA) | 1.3 | 0.930 | 15.0% Ethyl Acrylate |
| LOTADER AX8840 | Ethylene/Glycidyl Methacrylate Copolymer (E-GMA) | 5 | 0.94 | 8% Glycidyl Methacrylate |
| LOTADER AX8900 | Ethylene/Methyl Acrylate/Glycidyl Methacrylate Terpolymer (E-MA-GMA) | 6 | 0.94 | 24% Methyl Acrylate |
| | | | | 8% Glycidyl Methacrylate |
| LOTRYL 24MA02 | Ethylene/Methyl Acrylate Copolymer (EMA1) | 2 | 0.94 | 24.0% Methyl Acrylate |
| LOTRYL 29MA03 T | Ethylene/Methyl Acrylate Copolymer (EMA2) | 3 | 0.95 | 29.0% Methyl Acrylate |

DOWLEX^{™} 2045 is a linear low density polyethylene commercially available from The Dow Chemical Company. AMPLIFY^{™} EA 100 is an ethylene/ethyl acrylate copolymer commercially available from The Dow Chemical Company. LOTADER AX8840 is an ethylene/glycidyl methacrylate copolymer commercially available from Arkema Group. LOTADER AX8900 is an ethylene/methyl acrylate/glycidyl methacrylate terpolymer commercially available from Arkema Group. LOTRYL 24MA02 is an ethylene/methyl acrylate copolymer commercially available from Arkema Group. LOTRYL 29MA03T is an ethylene/methyl acrylate copolymer commercially available from Arkema Group.

The below examples illustrate the formation of laminates using polymer blends according to some embodiments of the present invention as an adhesive layer between two pieces of polyethylene terephthalate film. The PET film has a nominal thickness of 0.1 mm. The structure of the laminate is Layer A/Layer B/Layer C with Layer A and Layer C being the PET films and Layer B being the adhesive layer.

A variety of adhesive layers for Layer B are prepared as shown in Table 1:

**Table 1**

| | **Layer B (percentages are weight %)** | **Contents of Final Blends of Layer B (weight percent)** |
|---|---|---|
| **Comparative Example A** | 100% EEA | 15% Ethyl Acrylate |
| | | 0% Methyl Acrylate |
| | | 0% Glycidyl Methacrylate |
| | | 85% Ethylene |
| **Comparative Example B** | 100% E-MA-GMA | 0% Ethyl Acrylate |
| | | 24% Methyl Acrylate |
| | | 8% Glycidyl Methacrylate |
| | | 68% Ethylene |
| **Comparative Example C** | 70% LLDPE | 0% Ethyl Acrylate |
| | 30% E-MA-GMA | 7.2% Methyl Acrylate |
| | | 2.4% Glycidyl Methacrylate |
| | | 90.4% Ethylene |
| **Comparative Example D** | 70% EEA | 10.5% Ethyl Acrylate |
| | 30% E-GMA | 0% Methyl Acrylate |
| | | 2.4% Glycidyl Methacrylate |
| | | 87.1% Ethylene |
| **Comparative Example E** | 100% EMA1 | 0% Ethyl Acrylate |
| | | 24% Methyl Acrylate |
| | | 0% Glycidyl Methacrylate |
| | | 76% Ethylene |
| **Comparative Example F** | 100% EMA2 | 0% Ethyl Acrylate |
| | | 29% Methyl Acrylate |
| | | 0% Glycidyl Methacrylate |
| | | 71% Ethylene |
| **Comparative Example G** | 87% EEA | 13.1% Ethyl Acrylate |
| | 13% E-MA-GMA | 3.1% Methyl Acrylate |
| | | 1.0% Glycidyl Methacrylate |
| | | 82.8% Ethylene |
| **Comparative Example H** | 91% EEA | 13.7% Ethyl Acrylate |
| | 9% E-MA-GMA | 2.2% Methyl Acrylate |
| | | 0.7% Glycidyl Methacrylate |
| | | 83.4% Ethylene |
| **Inventive Example 1** | 70% EEA | 10.5% Ethyl Acrylate |
| | 30% E-MA-GMA | 7.2% Methyl Acrylate |
| | | 2.4% Glycidyl Methacrylate |
| | | 79.3% Ethylene |
| **Inventive Example 2** | 82.5% EEA | 12.4% Ethyl Acrylate |
| | 17.5% E-MA-GMA | 4.2% Methyl Acrylate |
| | | 1.4% Glycidyl Methacrylate |
| | | 82% Ethylene |
| **Inventive Example 3** | 70% EMA1 | 0% Ethyl Acrylate |
| | 30% E-MA-GMA | 24% Methyl Acrylate |
| | | 2.4% Glycidyl Methacrylate |
| | | 73.6% Ethylene |
| **Inventive Example 4** | 70% EMA2 | 0% Ethyl Acrylate |
| | 30% E-MA-GMA | 27.5% Methyl Acrylate |
| | | 2.4% Glycidyl Methacrylate |
| | | 70.1% Ethylene |

The Inventive Examples are polymer blends according to some embodiments of the present invention.

The Layer B components are compounded and extruded on a Leistritz ZSE-27 (Leistritz AG) intermeshing, co-rotating twin screw extruder having a diameter of 28 mm and a length-to-diameter (L/D) ratio of 48. The extruder is equipped with a 34 kW motor and has a maximum screw speed of 1200 rpm to provide an output of 5-30 kg/hour.

The Comparative and Inventive Examples are prepared by heat lamination as follows. 15 grams of the well-mixed polymer blend is placed between two pieces of PET film (nominal diameter of each PET film is 0.1 mm), and then the structure is placed between two flat, stainless steel molds. The whole molds are placed into a hot press machine at a temperature of 200° C under the following conditions: pre-heating time = 3 minutes; number of vents = 6, final pressing time = 1 minute at 50 bars of pressure; cooling time = 1 minute.

48 hours after heat lamination, the adhesion (or bonding strength) of the polymer blend in the laminate is measured according to the T-peel strength configuration of ASTM D3330 using an INSTRON 5566 load frame. 300 mm by 15 mm sample strips are cut from the Comparative and Inventive Example structures for measurement. The adhesion is measured at a peel angle of 180° and a grip separation rate of 100 mm/minute. At least five specimens of each Example are tested.

In addition, the samples are analyzed to determine whether the failure in the bonding strength test is adhesive failure (one PET layer (Layer A or Layer C) peeled off cleanly from the adhesive layer (Layer B)) or cohesive failure (the adhesive (Layer B) is not entirely removed from either PET film, but a fibrous fracture is observed).

The results are shown in Table 2:

**Table 2**

| | **Layer B (percentages are weight %)** | **Contents of Final Blends of Layer B (weight percent)** | **Peel Strength (N/15 mm)** | **Failure Mode** |
|---|---|---|---|---|
| **Comparative Example A** | 100% EEA | 15% Ethyl Acrylate | 0.3 | Adhesive |
| | | 0% Methyl Acrylate | | |
| | | 0% Glycidyl | | |
| | | Methacrylate | | |
| | | 85% Ethylene | | |
| **Comparative Example B** | 100% E-MA-GMA | 0% Ethyl Acrylate | 56.8 | Cohesive |
| | | 24% Methyl Acrylate | | |
| | | 8% Glycidyl | | |
| | | Methacrylate | | |
| | | 68% Ethylene | | |
| **Comparative Example C** | 70% LLDPE 30% E-MA-GMA | 0% Ethyl Acrylate | 1.0 | Adhesive |
| | | 7.2% Methyl Acrylate | | |
| | | 2.4% Glycidyl | | |
| | | Methacrylate | | |
| | | 90.4% Ethylene | | |
| **Comparative Example D** | 70% EEA 30% E-GMA | 10.5% Ethyl Acrylate | 0.4 | Adhesive |
| | | 0% Methyl Acrylate | | |
| | | 2.4% Glycidyl | | |
| | | Methacrylate | | |
| | | 87.1% Ethylene | | |
| **Comparative Example E** | 100% EMA1 | 0% Ethyl Acrylate | 1.0 | Adhesive |
| | | 24% Methyl Acrylate | | |
| | | 0% Glycidyl | | |
| | | Methacrylate | | |
| | | 76% Ethylene | | |
| **Comparative Example F** | 100% EMA2 | 0% Ethyl Acrylate | 31.9 | Cohesive |
| | | 29% Methyl Acrylate | | |
| | | 0% Glycidyl | | |
| | | Methacrylate | | |
| | | 71% Ethylene | | |
| **Comparative Example G** | 87% EEA 13% E-MA-GMA | 13.1% Ethyl Acrylate | 12.9 | Adhesive |
| | | 3.1% Methyl Acrylate | | |
| | | 1.0% Glycidyl | | |
| | | Methacrylate | | |
| | | 82.8% Ethylene | | |
| **Comparative Example** H | 91% EEA 9% E-MA-GMA | 13.7% Ethyl Acrylate | 5.5 | Adhesive |
| | | 2.2% Methyl Acrylate | | |
| | | 0.7% Glycidyl | | |
| | | Methacrylate | | |
| | | 83.4% Ethylene | | |
| **Inventive** | 70% EEA | 10.5% Ethyl Acrylate | 50.9 | Cohesive |
| **Example 1** | 30% E-MA-GMA | 7.2% Methyl Acrylate | | |
| | | 2.4% Glycidyl | | |
| | | Methacrylate | | |
| | | 79.3% Ethylene | | |
| **Inventive Example 2** | 82.5% EEA 17.5% E-MA-GMA | 12.4% Ethyl Acrylate | 50.4 | Cohesive |
| | | 4.2% Methyl Acrylate | | |
| | | 1.4% Glycidyl | | |
| | | Methacrylate | | |
| | | 82% Ethylene | | |
| **Inventive Example 3** | 70% EMA1 30% E-MA-GMA | 0% Ethyl Acrylate | 50.5 | Cohesive |
| | | 24% Methyl Acrylate | | |
| | | 2.4% Glycidyl | | |
| | | Methacrylate | | |
| | | 73.6% Ethylene | | |
| **Inventive Example 4** | 70% EMA2 30% E-MA-GMA | 0% Ethyl Acrylate | 78.2 | Cohesive |
| | | 27.5% Methyl | | |
| | | Acrylate | | |
| | | 2.4% Glycidyl | | |
| | | Methacrylate | | |
| | | 70.1% Ethylene | | |

Comparative Example A, which is 100% ethylene ethyl acrylate copolymer provides a very weak bonding strength to the PET films in the laminate, while Comparative Example B (100% E-MA-GMA terpolymer) exhibit a very strong bonding strength and leads to a cohesive failure mode. While not wishing to be bound by theory, it is believed that the strong bonding strength in Comparative Example B is a result of the 8 weight percent glycidyl methacrylate which is available to effectively react with hydroxyl groups on the PET surface. Surprisingly, with Inventive Example 1, it was observed that a high bonding strength could be provided by a polymer blend that only includes 30 weight percent of the E-MA-GMA terpolymer (the balance being EEA copolymer). In particular, a bonding strength comparable to Comparative Example B is observed with 70% less of the E-MA-GMA terpolymer in Inventive Example 1.

The data in Table 2 also illustrate other factors important in bonding strength. First, chemistry of the base resin (the majority component) in the blend is important. As show in Comparative Example C, blending the E-MA-GMA terpolymer with polyethylene will not provide the desired high bonding strength.

The structure of ethylene acrylate copolymers is also an important factor. As shown in Comparative Examples E and F, heterogeneous acrylate copolymer with an asymmetric structure (EMA2, which is made in a tubular reactor) shows a better bonding strength than a homogeneous acrylate copolymer (EMA1, which is made in an auto-clave reactor).

The chain structure of the copolymer containing the glycidyl methacrylate group is another important factor. As shown in Comparative Example D, blending ethylene ethyl acrylate copolymer with an ethylene glycidyl methacrylate copolymer did not provide desirable bonding strength either, whereas Inventive Example 1 did when using the E-MA-GMA terpolymer. The E-MA-GMA terpolymer in Example 1 includes 24% methyl acrylate which is not present in the ethylene glycidyl methacrylate copolymer used in Comparative Example D. This illustrates the importance of ethylene-methyl acrylate-glycidyl methacrylate terpolymers to the inventive polymer blends.

Finally, the amount of the E-MA-GMA terpolymer in the blend is also an important factor. As shown in Inventive Example 2, blending 17.5% of the E-MA-GMA terpolymer with ethylene ethyl acrylate still provides desired bonding strength to PET films. However, the bonding strength decreases dramatically when the content of the E-MA-GMA terpolymer is below 13% (Comparative Examples G and H).

## Claims

1. A polymer blend comprising:
(a) a terpolymer comprising ethylene, alkyl acrylate, and glycidyl methacrylate, having an alkyl acrylate content of 5 to 30 weight percent based on the weight of the terpolymer and having a glycidyl methacrylate content of 1 to 10 weight percent based on the weight of the terpolymer, wherein the amount of terpolymer (a) comprises 10 to 50 weight percent of the blend based on the total weight of the blend, and wherein the alkyl acrylate is methyl acrylate or butyl acrylate; and
(b) a copolymer comprising ethylene and at least one of methyl acrylate and ethyl acrylate having an acrylate content of 5 to 30 weight percent based on the weight of the copolymer, wherein the amount of copolymer (b) comprises 50 to 90 weight percent of the blend based on the total weight of the blend,
wherein the amount of terpolymer (a) and copolymer (b) is at least 80 weight percent of the blend based on the total weight of the blend.

2. The polymer blend of claim 1, wherein the alkyl acrylate in terpolymer (a) is methyl acrylate.

3. The polymer blend of claim 1 or claim 2, wherein the melt index (I₂) ratio of terpolymer (a) to copolymer (b) (I₂ of terpolymer (a)/I₂ of copolymer (b)) is greater than 2.

4. The polymer blend of any of the preceding claims, wherein copolymer (b) comprises ethylene and ethyl acrylate and wherein the polymer blend comprises 4 to 30 weight percent methyl acrylate, less than 13 weight percent ethyl acrylate, and less than 3 weight percent glycidyl methacrylate, each based on the total weight of the polymer blend.

5. The polymer blend of any of claims 1-3, wherein copolymer (b) comprises ethylene and methyl acrylate and wherein the polymer blend comprises 4 to 30 weight percent methyl acrylate, less than 13 weight percent ethyl acrylate, and less than 3 weight percent glycidyl methacrylate, each based on the total weight of the polymer blend.

6. The polymer blend of any of the preceding claims further comprising a polyolefin having a density of 0.910 g/cm³ or less.

7. The polymer blend of claim 6, wherein the blend comprises 20 weight percent or less of the polyolefin based on the total weight of the blend.

8. The polymer blend of any of claims 1-7, wherein the blend comprises 10 to 20 weight percent of terpolymer (a), 70 to 90 weight percent of copolymer (b), and 0 to 10 weight percent of the polyolefin, based on the total weight of the blend.

9. A laminate comprising at least three layers, each layer having opposing facial surfaces, wherein:
Layer A comprises polyethylene terephthalate;
Layer B comprises the polymer blend of any of claims 1-8, wherein a top facial surface of Layer B is in adhering contact with a bottom facial surface of Layer A; and
Layer C comprises polyethylene terephthalate,
wherein a top facial surface of Layer C is in adhering contact with a bottom facial surface of Layer B.

10. The laminate of claim 9, wherein at least one of Layer A and Layer C is a monolayer film.

11. The laminate of claim 9, wherein at least one of Layer A and Layer C is a multilayer film, and wherein an outermost layer of such multilayer film is a polyethylene terephthalate layer in adhering contact with Layer B.

12. An article comprising the laminate of any of claims 9-11.

13. The article of claim 12, wherein the article is a package.

## Patentansprüche

1. Polymermischung, umfassend:
(a) ein Terpolymer, umfassend Ethylen, Alkylacrylat und Glycidylmethacrylat, das einen Alkylacrylatgehalt von 5 bis 30 Gewichtsprozent, bezogen auf das Gewicht des Terpolymers, und einen Glycidylmethacrylatgehalt von 1 bis 10 Gewichtsprozent, bezogen auf das Gewicht des Terpolymers, aufweist, wobei die Menge an Terpolymer (a) 10 bis 50 Gewichtsprozent der Mischung, bezogen auf das Gesamtgewicht der Mischung, umfasst, und wobei das Alkylacrylat Methylacrylat oder Butylacrylat ist; und
(b) ein Copolymer, umfassend Ethylen und mindestens eines von Methylacrylat und Ethylacrylat, das einen Acrylatgehalt von 5 bis 30 Gewichtsprozent, bezogen auf das Gewicht des Copolymers, aufweist, wobei die Menge an Copolymer (b) 50 bis 90 Gewichtsprozent der Mischung, bezogen auf das Gesamtgewicht der Mischung, umfasst,
wobei die Menge an Terpolymer (a) und Copolymer (b) mindestens 80 Gewichtsprozent der Mischung, bezogen auf das Gesamtgewicht der Mischung, beträgt.

2. Polymermischung nach Anspruch 1, wobei das Alkylacrylat in Terpolymer (a) Methylacrylat ist.

3. Polymermischung nach Anspruch 1 oder 2, wobei das Verhältnis des Schmelzindex (I₂) von Terpolymer (a) zu Copolymer (b) (I₂ von Terpolymer (a)/I₂ von Copolymer (b)) größer als 2 ist.

4. Polymermischung nach einem der vorstehenden Ansprüche, wobei das Copolymer (b) Ethylen und Ethylacrylat umfasst und wobei die Polymermischung zu 4 bis 30 Gewichtsprozent Methylacrylat, weniger als 13 Gewichtsprozent Ethylacrylat und weniger als 3 Gewichtsprozent Glycidylmethacrylat, jeweils bezogen auf das Gesamtgewicht der Polymermischung, umfasst.

5. Polymermischung nach einem der Ansprüche 1-3, wobei das Copolymer (b) Ethylen und Methylacrylat umfasst und wobei die Polymermischung zu 4 bis 30 Gewichtsprozent Methylacrylat, weniger als 13 Gewichtsprozent Ethylacrylat und weniger als 3 Gewichtsprozent Glycidylmethacrylat, jeweils bezogen auf das Gesamtgewicht der Polymermischung, umfasst.

6. Polymermischung nach einem der vorstehenden Ansprüche, ferner umfassend ein Polyolefin mit einer Dichte von 0,910 g/cm³ oder weniger.

7. Polymermischung nach Anspruch 6, wobei die Mischung zu 20 Gewichtsprozent oder weniger das Polyolefin, bezogen auf das Gesamtgewicht der Mischung, umfasst.

8. Polymermischung nach einem der Ansprüche 1-7, wobei die Mischung zu 10 bis 20 Gewichtsprozent Terpolymer (a), 70 bis 90 Gew.-% Copolymer (b) und 0 bis 10 Gewichtsprozent das Polyolefin, bezogen auf das Gesamtgewicht der Mischung, umfasst.

9. Laminat, umfassend mindestens drei Schichten, jede Schicht aufweisend gegenüberliegende Stirnoberflächen, wobei:
Schicht A Polyethylenterephthalat umfasst,
Schicht B die Polymermischung nach einem der Ansprüche 1 bis 8 umfasst, wobei eine obere Stirnoberfläche von Schicht B in haftendem Kontakt mit einer unteren Stirnoberfläche von Schicht A ist; und
Schicht C Polyethylenterephthalat umfasst,
wobei eine obere Stirnoberfläche von Schicht C in haftendem Kontakt mit einer unteren Stirnoberfläche von Schicht B ist.

10. Laminat nach Anspruch 9, wobei mindestens eine von Schicht A und Schicht C eine Einschichtfolie ist.

11. Laminat nach Anspruch 9, wobei mindestens eine von Schicht A und Schicht C eine Mehrschichtfolie ist, und wobei eine äußerste Schicht einer solchen Mehrschichtfolie eine Polyethylenterephthalatschicht in Haftkontakt mit Schicht B ist.

12. Erzeugnis, umfassend das Laminat nach einem der Ansprüche 9 bis 11.

13. Erzeugnis nach Anspruch 12, wobei das Erzeugnis ein Paket ist.

## Revendications

1. Mélange polymère comprenant :
(a) un terpolymère comprenant de l'éthylène, de l'acrylate d'alkyle, et du méthacrylate de glycidyle, ayant une teneur en acrylate d'alkyle de 5 à 30 pour cent en poids sur la base du poids du terpolymère et ayant une teneur en méthacrylate de glycidyle de 1 à 10 pour cent en poids sur la base du poids du terpolymère, dans lequel la quantité de terpolymère (a) représente 10 à 50 pour cent en poids du mélange sur la base du poids total du mélange, et dans lequel l'acrylate d'alkyle est l'acrylate de méthyle ou l'acrylate de butyle ; et
(b) un copolymère comprenant de l'éthylène et au moins l'un parmi l'acrylate de méthyle et l'acrylate d'éthyle ayant une teneur en acrylate de 5 à 30 pour cent en poids sur la base du poids du copolymère, dans lequel la quantité de copolymère (b) représente 50 à 90 pour cent en poids du mélange sur la base du poids total du mélange,
dans lequel la quantité de terpolymère (a) et de copolymère (b) est d'au moins 80 pour cent en poids du mélange sur la base du poids total du mélange.

2. Mélange polymère selon la revendication 1, dans lequel l'acrylate d'alkyle dans le terpolymère (a) est l'acrylate de méthyle.

3. Mélange polymère selon la revendication 1 ou la revendication 2, dans lequel le rapport d'indice de fusion (I)₂ du terpolymère (a) au copolymère (b) (I₂ du terpolymère (a)/I₂ du copolymère (b)) est supérieur à 2.

4. Mélange polymère selon l'une quelconque des revendications précédentes, dans lequel le copolymère (b) comprend de l'éthylène et de l'acrylate d'éthyle et dans lequel le mélange polymère comprend 4 à 30 pour cent en poids d'acrylate de méthyle, moins de 13 pour cent en poids d'acrylate d'éthyle, et moins de 3 pour cent en poids de méthacrylate de glycidyle, chacun sur la base du poids total du mélange polymère.

5. Mélange polymère selon l'une quelconque des revendications 1 à 3, dans lequel le copolymère (b) comprend de l'éthylène et de l'acrylate de méthyle et dans lequel le mélange polymère comprend 4 à 30 pour cent en poids d'acrylate de méthyle, moins de 13 pour cent en poids d'acrylate d'éthyle, et moins de 3 pour cent en poids de méthacrylate de glycidyle, chacun sur la base du poids total du mélange polymère.

6. Mélange polymère selon l'une quelconque des revendications précédentes, comprenant en outre une polyoléfine ayant une masse volumique de 0,910 g/cm³ ou moins.

7. Mélange polymère selon la revendication 6, dans lequel le mélange comprend 20 pour cent en poids ou moins de la polyoléfine sur la base du poids total du mélange.

8. Mélange polymère selon l'une quelconque des revendications 1 à 7, dans lequel le mélange comprend 10 à 20 pour cent en poids de terpolymère (a), 70 à 90 pour cent en poids de copolymère (b), et 0 à 10 pour cent en poids de la polyoléfine, sur la base du poids total du mélange.

9. Stratifié comprenant au moins trois couches, chaque couche ayant des surfaces faciales opposées, dans lequel :
la couche A comprend du poly(téréphtalate d'éthylène) ;
la couche B comprend le mélange polymère selon l'une quelconque des revendications 1 à 8, dans lequel une surface faciale supérieure de la couche B est en contact adhérent avec une surface faciale inférieure de la couche A ; et
la couche C comprend du poly(téréphtalate d'éthylène),
dans lequel une surface faciale supérieure de la couche C est en contact adhérent avec une surface faciale inférieure de la couche B.

10. Stratifié selon la revendication 9, dans lequel au moins l'une parmi la couche A et la couche C est un film monocouche.

11. Stratifié selon la revendication 9, dans lequel au moins l'une parmi la couche A et la couche C est un film multicouche, et dans lequel une couche la plus externe d'un tel film multicouche est une couche de poly(téréphtalate d'éthylène) en contact adhérent avec la couche B.

12. Article comprenant le stratifié selon l'une quelconque des revendications 9 à 11.

13. Article selon la revendication 12, dans lequel l'article est un conditionnement.
